# EUROPEAN PATENT APPLICATION

(11) **EP 1 482 403 A2**
(43) Date of publication of application: **01.12.2004**
(21) Application number: 04252867.9
(22) Date of filing: 17.05.2004
(51) Int. Cl.: G06F 7/24

(54) **Multiple key self-sorting table**

(30) Priority: 29.05.2003 US 447860
(71) Applicant: Marconi Intellectual Property (Ringfence) Inc., Warrendale, Pennsylvania 15086 (US)
(72) Inventor: Hook, Joseph A., Baden Pennsylvania 15005 (US); Horner, Jeremy William, Notringham, MD 21236 (US)
(74) Representative: O'Connell, David Christopher

(57) **Abstract**

A multiple key self-sorting table. The table includes a plurality of intelligent self-sorting modules. Each module of the plurality of modules having an entry with at least one value. Each module making a decision to perform one of a plurality of acts, and preferably four acts, when there is an addition or deletion of an entry to the table; it holds its current value, stores a new entry, takes an entry from its immediately adjacent module with a higher value or takes an entry from its immediately adjacent module with a lower value; and performing the decision. A method for sorting a table. The method includes the steps of making a decision by each module, having an entry with at least one value, of a plurality of modules intelligent self-sorting modules to perform one of a plurality of acts, and preferably four acts, when there is an addition or deletion of an entry to the table; holding its current value, storing a new entry, taking an entry from its immediately adjacent module with a higher value or taking an entry from its immediately adjacent module with a lower value. There is the step of performing the decision.

## Description

### FIELD OF THE INVENTION

The present invention relates to a multiple key self-sorting table that provides a set of ordered lists for any number of keys. More specifically, the present invention relates to a multiple key self-sorting table that provides a set of ordered lists for any number of keys with a plurality of intelligent self-sorting modules.

### BACKGROUND OF THE INVENTION

A sorted list is a common requirement in data communications. This list can be sorted by one, two, or more keys, needs to have entries added arbitrarily and the first entry for a given key needs to be removable. In previous designs, small, fixed size arrays were used. The small number of entries was searched for a minimum whenever needed, requiring a tree of comparators to find the smallest. This approach was not scalable as the latency of the search grew with the size of the array. This approach also used separate fixed-size tables for each key, which was inefficient when all keys were not used. Another difference between the approaches is the way the entries are stored. Previously, entries were stored in memory arrays.

In the present invention, discreet flops are used to make all entries accessible at all times. The present invention, called the Multiple Key Self-Sorting Table, provides a set of ordered lists for any number of keys. It efficiently allows an entry to be added or an entry to be removed with very little latency. The table allows flexible allocation of entries between keys and scales well. The approach uses efficient hardware in parallel operation to create a fast, scalable solution for a table sorted by multiple keys.

### SUMMARY OF THE INVENTION

The present invention pertains to a multiple key self-sorting table. The table comprises a plurality of intelligent self-sorting modules. Each module of the plurality of modules having an entry with at least one value. Each module making a decision to perform one of a plurality of acts, and preferably four acts, when there is an addition or deletion of an entry to the table; it holds its current value, stores a new entry, takes an entry from its immediately adjacent module with a higher value or takes an entry from its immediately adjacent module with a lower value; and performing the decision.

The present invention pertains to a method for sorting a table. The method comprises the steps of making a decision by each module, having an entry with at least one value, of a plurality of modules intelligent self-sorting modules to perform one of four acts when there is an addition or deletion of an entry to the table; holding its current value, storing a new entry, taking an entry from its immediately adjacent module with a higher value or taking an entry from its immediately adjacent module with a lower value. There is the step of performing the decision.

### BRIEF DESCRIPTION OF THE DRAWINGS

In the accompanying drawings, the preferred embodiment of the invention and preferred methods of practicing the invention are illustrated in which:
Figure 1 is a schematic representation of a self-sorting table of the present invention.
Figure 2 shows a self-sorting table in operation.
Figure 3 is a schematic representation of a module of the present invention.

### DETAILED DESCRIPTION

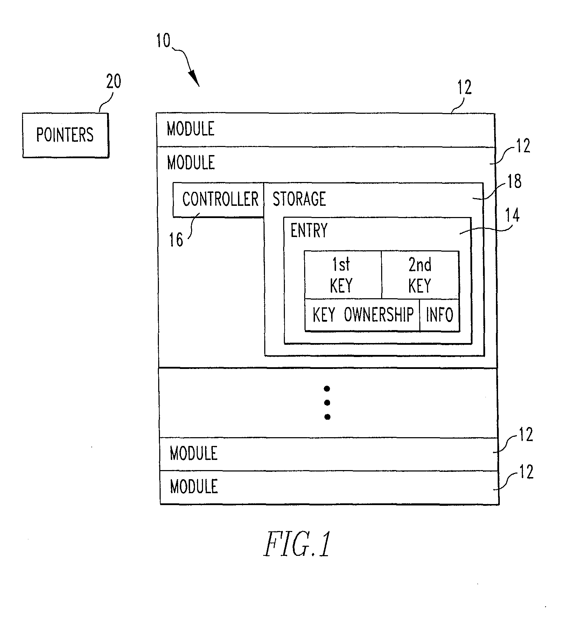

Referring now to the drawings wherein like reference numerals refer to similar or identical parts throughout the several views, and more specifically to figure 1 thereof, there is shown a multiple key self-sorting table 10. The table 10 comprises a plurality of intelligent self-sorting modules 12. Each module of the plurality of modules 12 having an entry 14 with at least one value. Each module making a decision to perform one of a plurality of acts, and preferably four acts, when there is an addition or deletion of an entry 14 to the table 10; *i* it holds its current value, stores a new entry 14, takes an entry 14 from its immediately adjacent module with a higher value or takes an entry 1₄ from its immediately adjacent module with a lower value; and performing the decision.

Preferably, each module comprises a controller 16 and storage 18 connected to the controller 16 for storing the entry 14. Each entry 14 preferably has a first key and at least a second key, and including a plurality of pointers 20, with a pointer 20 of the plurality of pointers 20 pointing to a first entry 14 of a first key. Preferably, the controller 16 informs the immediately adjacent module with the higher value and immediately adjacent module with a lower value, the value of the entry 14 in the storage 18 connected to the controller 16.

Each controller 16 preferably calculates a result of whether or not an entry 14 to be added or subtracted has a higher or lower value than the entry 14 stored in the storage 18 connected to the controller 16 and informs the immediately adjacent module with the higher value and immediately adjacent module with a lower value, the result. Preferably, each controller 16 makes its decision in parallel with all other controllers 16 of the plurality of modules 12 based on its result and the result of the immediately adjacent module with the higher value and the immediately adjacent module with the lower value.

The present invention pertains to a method for sorting a table 10. The method comprises the steps of making a decision by each module, having an entry 14 with at least one value, of a plurality of modules 12 intelligent self-sorting modules 12 to perform one of a plurality of acts, and preferably four acts, when there is an addition or deletion of an entry 14 to the table 10; holding its current value, storing a new entry 14, taking an entry 14 from its immediately adjacent module with a higher value or taking an entry 14 from its immediately adjacent module with a lower value. There is the step of performing the decision.

Preferably, each entry 14 has a first key and at least a second key, and including the step of pointing with'a pointer of a plurality of pointers 20 to a first entry 14 of a first key. Each module preferably comprises a controller 16 and storage 19 .' connected to the controller 16 for storing the entry 14 and including the step of informing with a controller 16 of each module the immediately adjacent module with the higher value and immediately adjacent module with a lower value, the value of the entry 14 in the storage 18 connected to the controller 16

Preferably, there are the steps of calculating with each controller 16 a result of whether or not an entry 14 to be added or subtracted has a higher or lower value than the entry 14 stored in the storage 18 connected to the controller 16, and informing the immediately adjacent module with the higher value and immediately adjacent module with a lower value, the result. The decision making step preferably includes the step of each controller 16 making its decision in parallel with all other controllers 16 of the plurality of modules 12 based on its result and the result of the immediately adjacent module with the higher value and the immediately adjacent module with the lower value.

In the operation of the invention, in a Multiple Key Self-Sorting Table 10, every entry 14 is an intelligent self-sorting module. In the example below, a dual key table 10 is shown with the first key being a port number, All entries belonging to a given port are consecutive in the table 10. A port's entries are further sorted by a second key. This key provides a means of finding the next entry 14 to use for the port - the one with the lowest key value. The left side of the figure shows Port 0 with 3 active entries with values of 3, 13, and 37. Forts 1 and 2 are empty, and Port 3 has at least two entries with values 11 and 92. The right side of the figure shows the table 10 after Port 2 adds an entry 14 and the head entry 14 is removed for Port 0. The head pointers 20 are necessary to read the first entry 14 for a port when it is not at the top of the table 10.

Each intelligent module does one of four things when an entry 14 is added/deleted. It can (1) hold its current value, (2) store the new entry 14, (3) take the entry 14 from its higher neighbor, or (4) take the entry 14 from its lower neighbor. Each entry 14 needs only knowledge of its neighbors and the entries being added or removed to decide which action to take. Each entry 14 calculates whether or not the entry 14 to be added or subtracted is above or below it. Each entry 14 then informs its two neighbors of the results of the calculations. Based on this information, they all make the decision of which operation to perform in parallel. This means that the structure works at the same speed for arbitrarily large arrays. The additional fanout of insertion/removal information, the added silicon for new entries, and the mux tree required to extract individual entries are the only barriers to growing the array indefinitely. Because each entry 14 is computing its next value at the same time, the structure can update very quickly without the large delay of serial comparisons used in previous designs.

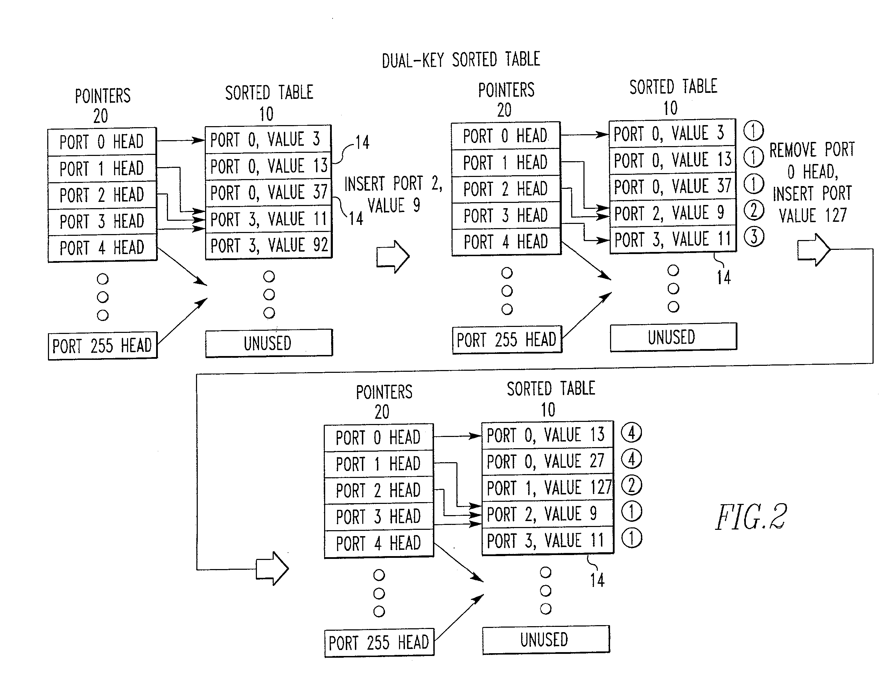

Figure 2 shows a Dual-Key Self-Sorting Table 10 in operation. Each of the transformations shown is performed very quickly since each module makes its decision (shown in the circle to the right of each step) in parallel. Because data is stored already sorted, accessing the minimum value for a port becomes a trivial task.

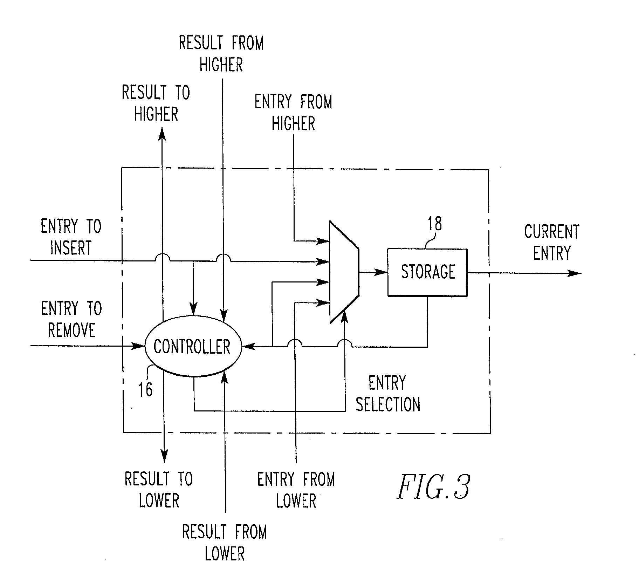

Each individual sorting module has the structure shown in figure 3.

In order for each module to operate at the same time, each module receives a copy of the same clock signal - they are in the same clock domain. This clock is a periodic pulse that tells all logic to execute an iteration.

The timing signal is generated on a circuit board, as is well known in the art. It is distributed to all of the ASICs on the board, each of which distribute it to all of the control and storage 18 logic everywhere in them, including these modules 12.

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims,

## Claims

1. A multiple key self-sorting table comprising:
a plurality of intelligent self-sorting modules, each module of the plurality of modules having an entry with at least one value, each module making a decision to perform one of a plurality of acts.

2. A table as described in Claim 1 wherein the plurality of acts performed by each module includes four acts, when there is an addition or deletion of an entry to the table; it holds its current value, stores a new entry, takes an entry from its immediately adjacent module with a higher value or takes an entry from its immediately adjacent module with a lower value; and performing the decision.

3. A table as described in Claim 2 wherein each module comprises a controller and storage connected to the controller for storing the entry.

4. A table as described in Claim 3 wherein each entry has a first key and at least a second key, and including a plurality of pointers, with a pointer of the plurality of pointers pointing to a first entry of a first key.

5. A table as described in Claim 4 wherein the controller informs the immediately adjacent module with the higher value and immediately adjacent module with a lower value, the value of the entry in the storage connected to the controller.

6. A table as described in Claim 5 wherein each controller calculates a result of whether or not an entry to be added or subtracted has a higher or lower value than the entry stored in the storage connected to the controller and informs the immediately adjacent module with the higher value and immediately adjacent module with a lower value, the result.

7. A table as described in Claim 6 wherein each controller makes its decision in parallel with all other controllers of the plurality of modules based on its result and the result of the immediately adjacent module with the higher value and the immediately adjacent module with the lower value.

8. A method for sorting a table comprising the steps of:
making a decision by each module, having an entry with at least one value, of a plurality of modules intelligent self-sorting modules to perform one of a plurality of acts; and
performing the decision.

9. A method as described in Claim 8 wherein the making step includes the step of making the decision to perform one of four acts when there is an addition or deletion of an entry to the table; holding its current value, storing a new entry, taking an entry from its immediately adjacent module with a higher value or taking an entry from its immediately adjacent module with a lower value

10. A method as described in Claim 9 wherein each entry has a first key and at least a second key, and including the step of pointing with a pointer of a plurality of pointers to a first entry of a first key.

11. A method as described in Claim 10 wherein each module comprises a controller and storage connected to the controller for storing the entry and including the step of informing with a controller of each module the immediately adjacent module with the higher value and immediately adjacent module with a lower value, the value of the entry in the storage connected to the controller.

12. A method as described in Claim 11 including the step of calculating with each controller a result of whether or not an entry to be added or subtracted has a higher or lower value than the entry stored in the storage connected to the controller, and informing the immediately adjacent module with the higher value and immediately adjacent module with a lower value, the result.

13. A method as described in Claim 12 wherein the making step includes the step of each controller making its decision in parallel with all other controllers of the plurality of modules based on its result and the result of the immediately adjacent module with the higher value and the immediately adjacent module with the lower value.
